Europäisches Patentamt

(19) European Patent Office

Office européen des brevets

(11) Veröffentlichungsnummer: **0 185 102**
**B1**

(12) **EUROPÄISCHE PATENTSCHRIFT**

(45) Veröffentlichungstag der Patentschrift:
25.01.89

(51) Int. Cl.⁴: **B 60 B 7/04,** B 60 B 7/06

(21) Anmeldenummer: **84115165.7**

(22) Anmeldetag: **11.12.84**

(54) **Kraftfahrzeugrad.**

(43) Veröffentlichungstag der Anmeldung:
25.06.86 Patentblatt 86/26

(45) Bekanntmachung des Hinweises auf die Patenterteilung:
25.01.89 Patentblatt 89/4

(84) Benannte Vertragsstaaten:
AT BE CH DE FR GB IT LI NL SE

(56) Entgegenhaltungen:
DE-U-8 326 027
FR-A-650 939
FR-A-682 858
FR-A-948 322
GB-A-526 576
US-A-2 016 395
US-A-4 067 621
US-A-4 470 638

(73) Patentinhaber: **BBS Kraftfahrzeugtechnik Aktiengesellschaft, Am Hohenstein 13 A, D-7622 Schiltach (DE)**

(72) Erfinder: **Frick, Ewald, Dipl.- Ing., Ehlenbogen 20/1, D-7297 Alpirsbach (DE)**
Erfinder: **Armbruster, Johannes, Am Rothekreuzberg 12, D-7620 Wolfach (DE)**

(74) Vertreter: **Kinkelin, Ulrich, Dipl.- Ing., Weimarer Strasse 32/34 Auf dem Goldberg, D-7032 Sindelfingen (DE)**

EP 0 185 102 B1

## Beschreibung

Die Erfindung bezieht sich auf ein Kraftfahrzeugrad mit einer Speichenscheibe und einer Radkappe mit den im Oberbegriff des Anspruchs 1 angegebenen bekannten Merkmalen.

Ein Kraftfahrzeugrad dieser Art ist beispielsweise aus dem DE-A-8 326 027 bekannt geworden. Die hieraus bekannte Konstruktion machte es möglich, die Speichenscheibe aus Leichtmetall herzustellen und die Befestigungsbohrung für die Radkappe unmittelbar in der Speichenscheibe herzustellen. Diese Befestigungsbohrung, deren Durchmesser größer als 5 cm ist, hat ein Innengewinde erhalten, welches die entsprechenden Halteflanken darstellt, an denen sich der Gewindeschaft eines entsprechend groß gestalteten schraubenähnlichen Befestigungsteiles abstützen konnte. Diese Art der Gewindeverbindung hat jedoch verschiedene Nachteile. Zum einen läßt sich ein Gewinde dieser Größenordnung nur mit entsprechend hohem fertigungstechnischem Aufwand sowohl in der Speichenscheibe als auch am Befestigungsteil herstellen, was bei diesem Massenprodukt eine unerwünschte Verteuerung bewirkt. Weiterhin kann es sehr leicht geschehen, daß besonders ungeübte Personen das Befestigungsteil nicht richtig einschrauben, zum Beispiel indem sie den Gewindeschaft verkantet in die Bohrung einführen und beim anschließenden gewaltsamen Einschrauben Gewindeteile beschädigen. Besonders wenn bei ungünstigen Witterungsverhältnissen, wie etwa im Winter, ein Radwechsel durchgeführt werden muß, erweist sich eine Schraubverbindung als zu empfindlich gegenüber solchen in der Praxis unvermeidlichen Handhabungsfehlern.

Aufgabe der Erfindung ist es daher, ein Kraftfahrzeugrad der im Oberbegriff des Anspruchs 1 genannten Gattung so weiterzubilden, daß die Fertigungskosten reduziert werden können und die Radkappe auch unter ungünstigen Umgebungsbedingungen einfach und sicher montiert werden kann.

Diese Aufgabe wird mit den kennzeichnenden Merkmalen des Anspruchs 1 gelöst. Der Vorteil der Erfindung besteht insbesondere darin, daß die Halteflanke in der Befestigungsbohrung sehr einfach hergestellt werden kann, beispielsweise indem in die ansonsten glatte zylindrische Befestigungsbohrung eine einfache Ringnut eingebracht wird. Das Befestigen der Radkappe erfolgt durch eine einfache Relativdrehung zwischen den beiden Schaftteilen, d. h. im konkreten Fall, daß der Kopf des Befestigungsteiles gegenüber der Deckscheibe verdreht wird, wodurch über einen Nockenmechanismus ein Formschlußeingriff hergestellt wird. Der Kopf des Befestigungsteils kann dabei zweckmäßigerweise wie ein Schraubenkopf als Sechskant ausgebildet sein, mit einer so großen Schlüsselweite, daß üblicherweise im Bordwerkzeug vorhandene Schraubenschlüssel zu klein sind, wodurch ein unbefugtes Abmontieren des Kraftfahrzeugrades erschwert wird. Darüber hinaus deutet die Kopfform bereits darauf hin, daß das Festsetzen bzw. Lösen des Befestigungsteils durch eine übliche Drehbewegung erfolgt, so daß man im Bedarfsfall ohne lange zu überlegen die richtige Betätigung ausführt. Das Befestigungsteil ist zwar zumindest zweiteilig, doch sind die beiden Teile gut für die Spritzgußherstellung geeignet.

Mit den weiterbildenden Merkmalen des Anspruchs 2 treffen die für die axiale Festlegung maßgeblichen Flächen keilartig aufeinander, wodurch einerseits Fertigungstoleranzen aufgefangen werden und andererseits die gesamte Radkappe auch axial mit Vorspannung gegen die Speichenscheibe gezogen wird. Es gibt dabei sowohl einen Reibschluß an der Berührungsstelle dieser kegeligen Flächen als auch an denjenigen Bereichen, an denen Teile der Radkappe axial gegen die Speichenscheibe gezogen werden. Daher kann sich die Deckscheibe gegenüber der Speichenscheibe im normalen Betrieb nicht selbsttätig verdrehen, was besonders dann von Bedeutung ist, wenn in der Deckscheibe ein Muster ausgeprägt ist, welches als Fortsetzung eines Musters in der Speichenscheibe dient und daher die beiden Teile zueinander ausgerichtet bleiben müssen.

Eine fertigungstechnisch besonders einfache Realisierung der Ringfläche erhält man gemäß der im Anspruch 3 angegebenen Ausbildung.

Weitere Vorteile und Ausgestaltungen ergeben sich aus den anschließenden Unteransprüchen sowie aus der nachfolgenden Beschreibung eines in der Zeichnung dargestellten Ausführungsbeispiels der Erfindung.

Es zeigt:

Fig. 1 einen Querschnitt durch den zentralen Teil einer Speichenscheibe mit aufgesetzter Radkappe gemäß der Erfindung in etwa natürlicher Größe,

Fig. 2 den Außenschaft in Ansicht,

Fig. 3 eine Schnittansicht des Außenschaftes entsprechender Schnittlinie 3-3 gemäß Fig. 2,

Fig. 4 den Innenschaft in Ansicht

Fig. 5 eine perspektivische Darstellung der Radkappe.

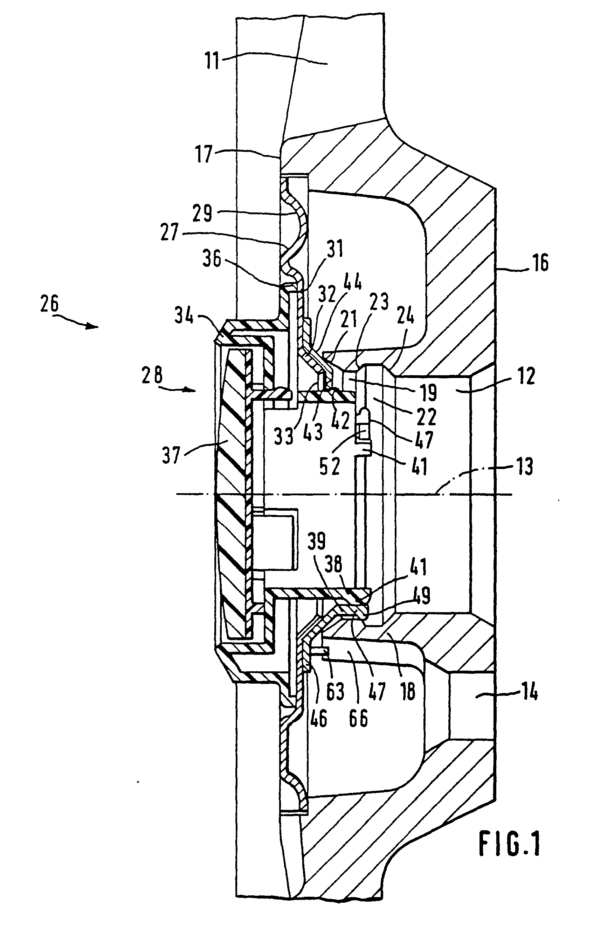

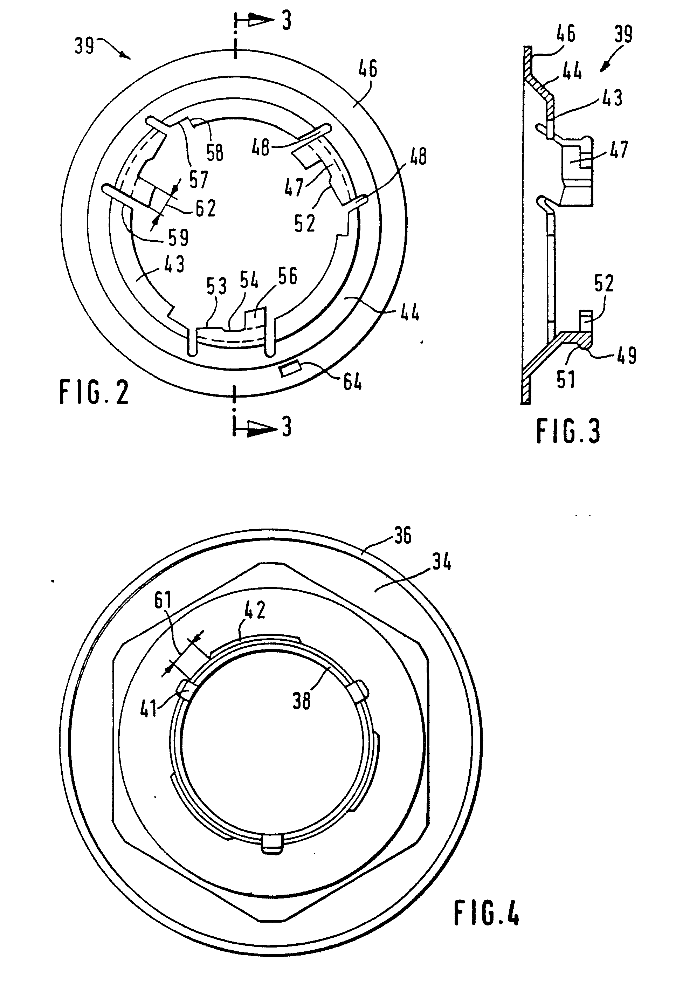

Die Speichenscheibe 11 gemäß Fig. 1 hat etwa tellerförmige Gestalt, jedoch ist in der Zeichnung nur der mittlere Bereich dargestellt. In ihrem Zentrum ist eine Zentralbohrung 12 ausgenommen, die koaxial zu einer späteren Rotationsachse 13 ausgerichtet ist. Diese Zentralbohrung 12 dient in bekannter Weise als Freistellung beispielsweise für eine Fettkappe an der Achse eines Kraftfahrzeugs. An einem zur Rotationsachse 13 koaxialen Lochkreis sind mehrere Durchgangsbohrungen vorgesehen, von denen nur die Durchgangsbohrung 14 sichtbar ist. Hier treten die für die Befestigung der Speichenscheibe an einer KFZ-Achse dienenden Schraubenbolzen hindurch, wobei die Innenseite 16 der Speichenscheibe 11 im montierten Zustand zur KFZ-Achse weist. An der gegenüberliegenden Seite der Durchgangsbohrungen 14 stützen sich dann in bekannter Weise Befestigungsmuttern ab, die hier nicht dargestellt sind.

Die Zentralbohrung 12 hat einen Durchmesser von etwa 60 mm und eine Länge von etwa 25 mm. Zur Außenseite 17 hin befindet sich in einem hülsenartigen Fortsatz 18 eine zur Rotationsachse 13 koaxiale Befestigungsbohrung 19, deren Durchmesser ebenfalls etwa 60 mm mißt. Sie erweitert sich am Ende des Fortsatzes 18 kegelig und bildet dort eine ringförmige Begrenzungsfläche 21. In ihrem zylindrischen Bereich ist eine Ringnut 22 eingebracht, vorzugsweise mit schrägen Seitenwänden 23 und 24. Die Seitenwand 23 bildet dabei eine koaxiale Ringfläche, die in etwa radial ausgerichtet ist und zur Innenseite 16 weist. Diese Ringfläche kann dabei vorzugsweise 45° gegenüber der Rotationsachse geneigt sein. Die Tiefe der Ringnut 22 ist hier beispielsweise 2 mm.

Eine Radkappe 26 welche zumindest den Zentralbereich mit den Befestigungsmuttern überdeckt, besteht aus einer Deckscheibe 27 und einem Befestigungsteil 28. Die Deckscheibe 27 hat eine äußere ringförmige Musterzone 29, eine zur Rotationsachse 13 hin daran anschließende ebene Ringzone 31 und dann etwa korrespondierend mit der ringförmigen Begrenzungsfläche 21 des Fortsatzes 18 eine Kegelzone 32, die eine zentrale Bohrung 33 begrenzt.

Das Befestigungsteil 28 hat einen Kopf 34, der als Außensechskant gestaltet ist, mit einer Schlüsselweite von etwa 80 mm, und der mit einer ringförmigen Flanschfläche 36 außenseitig an der Ringzone der Deckscheibe 27 anliegt. Im Mittelbereich des Kopfes 34 befindet sich ein Mittelstück 37, welches im Ausführungsbeispiel als separates Teil ausgebildet ist, da es vorzugsweise ein Firmenzeichen oder eine sonstige Verzierung trägt.

Am Kopf 34 ist ein die zentrale Bohrung 33 der Deckscheibe 27 durchsetzender und bis in den Bereich der Ringnut 22 vorstehender Innenschaft 38 angeformt, auf dem ein Außenschaft 39 von allgemein hülsenförmiger Gestalt begrenzt drehbar und axial arretierbar gelagert ist.

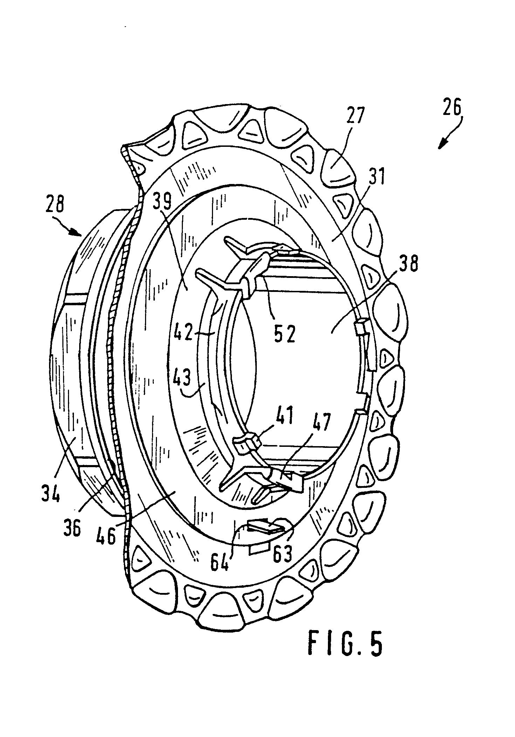

Der Innenschaft 38 hat zumindest in dem in die Befestigungsbohrung 19 eingreifenden Endbereich eine rohrförmige Gestalt, mit drei am Umfang verteilten, radial nach auswärts abstehenden Nocken 41, deren Anordnung und Form auch aus der Fig. 4 zu ersehen ist. Weiterhin sind am Außenumfang verteilt und axial gegenüber den Nocken 41 in Richtung zum Kopf 34 hin versetzt drei radial abstehende Rippensegmente 42 angeformt, die bajonettartig mit korrespondierenden Riegelflächensegmenten 43 des Außenschaftes 39 (Fig. 2) zusammenwirken. Der Innenschaft 38 ist einschließlich des Kopfes 34 als Spritzgußteil und aus Polyamid hergestellt.

Der Außenschaft 39, der in den Fig. 2 und 3 als Einzelteil dargestellt ist, hat einen mittleren kegeligen Bereich 44, an den sich an der einen Seite ein radial plan abstehender Ringbereich 46 anschließt. An der anderen Seite sind die drei vorhin schon erwähnten Riegelflächensegmente 43 radial zur Mitte hin ausgerichtet angeformt. Zwischen diesen befinden sich drei sagittale Zungen 47, die zufolge von jeweils beidseitig dazu in den kegeligen Bereich reichenden Einschnitten 48 eine ausreichende Länge erhalten, um federnd beweglich zu sein. Am Ende der Zungen 47 ist von deren Außenseite radial abstehend jeweils ein Wulst 49 angeformt. Die zum Ringbereich 46 hinweisenden Seitenflanken der Wülste 49 bilden Ringflächensegmente 51, die mit der die Ringfläche der Befestigungsbohrung 19 bildenden Seitenwand 23 der Ringnut 22 korrespondieren.

An den Zungen 47 sind weiterhin radial einwärts gerichtete Nockenbahnen 52 angeformt. Diese Nockenbahnen 52 sind in Umfangrichtung gesehen aufeinanderfolgend jeweils in eine Einlaufschräge 53, eine Rastmulde 54 und einen Drehanschlag 56 gegliedert. In Umfangsrichtung vor der Einlaufschräge 53 befindet sich jeweils eine Freistellung 57 in den Riegelflächensegmenten 43, deren Breite etwas größer als die Breite der Nocken 41 am Innenschaft 38 ist. Dies ermöglicht es, den Außenschaft auf den Innenschaft aufzustecken und die Nocken 41 axial in den Bereich der Nockenbahnen 52 zu bringen. Weiterhin ist die Länge der Rippensegmente 42 (Fig. 4) knapp kürzer als der Abstand zwischen der radialen Begrenzungswand 58 am Übergang zwischen der Freistellung 57 und dem Riegelflächensegment 43 und der nach der dazwischen liegenden Zunge 47 folgenden Begrenzungswand 59 des folgenden Riegelflächensegmentes 43. Dies ermöglicht es ebenfalls, den Außenschaft auf den Innenschaft aufzustecken, wobei die Rippensegmente 42 bajonettartig durch die Lücken zwischen den Riegelflächensegmenten 43 hindurchgeschoben werden können, um dann nach einer anschließenden Verdrehung der beiden Teile riegelartig aufeinander zu gleiten.

Aus Fig. 4 ist zu ersehen, daß die Nocken 41 in Umfangrichtung gegenüber den Rippensegmenten 42 etwas versetzt sind, wobei der Versetzungsabstand 61 etwas größer als die Breite 62 der Drehanschläge 56 an den Nockenbahnen 52 gemäß Fig. 2 ist. Durch diese Ausbildung wird erreicht, daß die Rippensegmente 42 in den beiden Drehanschlagpositionen von Innenschaft zu Außenschaft jeweils mit einem Riegelflächensegment in Eingriff stehen und nur in einer dazwischen liegenden Position außer Eingriff sind. Dadurch wird erreicht, daß die beiden Teile in den normalerweise vorherrschenden Drehanschlagpositionen zuverlässig gegeneinander verriegelt sind. Zur Trennung muß nämlich ein Zwischenzustand eingestellt werden, der beim normalen Betätigen überfahren wird. Der Außenschaft 39 wird ebenfalls als Spritzgußteil, vorzugsweise aus faserverstärktem Polyamid, hergestellt.

Die Fig. 5 zeigt die aus Deckscheibe 27 und Befestigungsteil 28 bestehende Radkappe 26. Die vorzugsweise metallene Deckscheibe 27 ist an ihrer planen Ringzone 31 zwischen der ringförmigen Flanschfläche 36 des Kopfes 34 und dem flanschförmigen Ringbereich 46 des Außenschaftes 39 eingespannt, indem die Rippensegmente 42 hinter den Riegelflächensegmenten 43 mit einer gewissen Vorspannung anliegen. Von der Deckscheibe 27 ist ein Lappen 63 hochgebogen, der in einen Schlitz 64 im Ringbereich 46 eingreift und damit den Außenschaft 39 gegenüber der Deckscheibe 27 unverdrehbar festhält. Wenn nun die Deckscheibe 27 festgehalten wird und der Kopf 34 gedreht wird, verdreht sich der Innenschaft 38 gegenüber dem Außenschaft 39, und dadurch bewegen sich die Nocken 41 unter die zugehörigen Zungen 47 und gleiten dort über die Einlaufschrägen 53 in die Rastmulden 54 der Nockenbahnen 52. Auf diese Art werden die Zungen 47 nach außen gebogen. Wenn also zuvor diese Radkappe 26 in die Speichenscheibe 11 eingesetzt wurde, wie dies in Fig. 1 gezeichnet ist, werden dadurch die Ringflächensegmente 51 an den Wülsten 49 gegen die Seitenwand 23 der Ringnut 22 in der Speichenscheibe 11 gepreßt, wodurch zufolge der keilförmig schrägen Anordnung dieser berührenden Flächen der Außenschaft 39 und mit diesem das Befestigungsteil 28 mit der Deckscheibe 27 axial festgezogen wird. In dem in Fig. 1 dargestellten Verbindungszustand liegen die Nocken 41 in den Rastmulden 54 der jeweiligen Nockenbahnen 52 und sind dabei unter elastischer Deformation des rohrförmigen Endbereiches des Innenschaftes 38 radial einwärts gedrückt. Es wird hier also die Formstabilität des rohrförmigen Innenschaftes als Federelement genutzt, womit man sehr große Preßkräfte erreichen kann. Mit der Größe dieser Preßkraft und der Tiefe der Rastmulden 54 kann man konstruktiv festlegen, welches Drehmoment zum Lösen der Verbindung notwendig ist. Man kann daher das zum Abmontieren der Radkappe erforderliche Drehmoment mit einer solchen Größe festlegen, daß dieses nur mittels eines Hilfswerkzeuges mit entsprechender Hebellänge aufgebracht werden kann, während man mit der bloßen Hand keinen Erfolg hat. Auf diese Weise wird der Diebstahlsgefahr vorgebeugt.

Gemäß Fig. 1 ist an den Fortsatz 18 ein radial abstehender Anschlagsteg 66 angeformt, an dem der Lappen 63 zur Anlage gebracht werden kann. Damit wird die Deckscheibe 27 zusammen mit dem Außenschaft 39 auch bezüglich der Speichenscheibe 11 drehfest abgestützt, so daß man diese Teile nicht besonders festzuhalten braucht. Zugleich wird damit auch die Position zwischen Deckscheibe 27 und Speichenscheibe 11 genau definiert, so daß die in deren Oberflächen ausgebildeten Musterungen in vorgegebener Weise zueinander ausgerichtet werden. Man kann natürlich die Deckscheibe 27 gegenüber der Speichenscheibe 11 auch auf andere Weise fixieren und dann entsprechend auf den Anschlagsteg 66 verzichten.

Abweichend vom vorhin beschriebenen Ausführungsbeispiel könnten auch die Rippensegmente 42 zu einer geschlossenen Kreisrippe erweitert werden, wobei dann die Verrastung von Außenschaft zu Innenschaft durch ein radiales federndes Ausweichen der Riegelflächensegmente 43 erfolgt, die beim Zusammenstecken der beiden Teile über diese Kreisrippe darüber gleiten und dahinter dann einrasten. Die bajonettartig lösbare Verbindung des Ausführungsbeispiels hat jedoch den Vorteil, daß man die Deckscheibe 27 beispielsweise zu Reinigungszwecken einfacher vom Befestigungsteil trennen kann.

Die kegelige ringförmige Begrenzungsfläche 21 am Beginn der Befestigungsbohrung 19 erleichtert das Einführen des Schaftes des Befestigungsteiles und deren Außenrand liegt dichtend am kegelförmigen Bereich 44 an, der gegenüberliegend an der Kegelzone 32 der Deckscheibe 27 gleichfalls dichtend anliegt. Stattdessen kann aber auch der Ringbereich 46 dichtend an der Ringzone 31 anlegen. Von der Außenseite her wird die ringförmige Flanschfläche 36 des Kopfes 34 ebenfalls dichtend gegen die Ringzone 31 angedrückt, so daß auf diese Weise der Bereich der Zentralbohrung 12 nach außen hin dicht abgeschlossen ist, um von der Radnabe eventuell austretendes Öl festzuhalten.

## Patentansprüche

1. Kraftfahrzeugrad mit einer Speichenscheibe und einer Radkappe mit folgenden bekannten Merkmalen:

a) die Speichenscheibe hat eine etwa tellerförmige Gestalt und ist aus Leichtmetall hergestellt, in ihrem Zentrum ist eine Zentralbohrung ausgenommen, die koaxial zu einer Rotationsachse ausgerichtet ist, an einem zur Rotationsachse koaxialen Lochkreis sind mehrere Durchgangsbohrungen für den Durchtritt von Schraubenbolzen zur Befestigung der Speichenscheibe an einer KFZ-Achse vorgesehen, wobei im montierten Zustand die Innenseite der Speichenscheibe zur KFZ-Achse weist, in der Speichenscheibe ist koaxial zur Rotationsachse und von der Außenseite zugänglich eine Befestigungsbohrung angeordnet, deren Durchmesser größer als 5 cm ist und in deren Innenwandung Halteflanken ausgebildet sind, die unter einem Keilwinkel bezüglich der Rotationsachse ausgerichtet sind;

b) an der Außenseite der Speichenscheibe ist eine Radkappe anbringbar, welche zumindest den Zentralbereich mit den Durchgangsbohrungen überdeckt;

c) die Radkappe besteht aus einer Deckscheibe mit einer zentralen Bohrung und einem diese Bohrung durchsetzenden Befestigungsteil;

d) das Befestigungsteil ist mit seinem Schaft in der Befestigungsbohrung der Speichenscheibe fixierbar und mit seinem Kopf außenseitig an die Deckscheibe anlegbar, um diese an der Speichenscheibe festzuhalten,

gekennzeichnet durch folgende Merkmale:

e) die Befestigungsbohrung (19) hat eine etwa radial verlaufende und zur Innenseite der Speichenschelbe (11) hin weisende koaxiale Ringfläche (23);

f) das Befestigungsteil (28) besteht aus einem mit dem Kopf (34) drehfest verbundenen und die zentrale Bohrung (33) der Deckscheibe (27) durchsetzenden Innenschaft (38) und einem darauf begrenzt drehbar und axial arretierbar gelagerten Außenschaft (39), der mit dem zum Kopf (34) weisenden Stirnbereich (46) innenseitig an die Deckscheibe (27) anlegbar ist;

g) der in die Befestigungsbohrung (19) einsetzbare Endbereich des Außenschaftes (39) hat zumindest drei am Umfang verteilte, radial federnde Zungen (47), in deren Außenseite zu der Ringfläche (23) in der Befestigungsbohrung korrespondierende, radial abstehend verlaufende und zur Deckscheibe (27) hinweisende koaxiale Ringflächensegmente (51 ) ausgebildet sind und wobei radial einwärts gerichtete Nockenbahnen (52) an der Innenseite der Zungen (47) angeformt sind;

h) der Innenschaft (38) hat im Endbereich eine der Anzahl der federnden Zungen (47) entsprechende Anzahl von radial auswärts abstehenden Nocken (41), welche durch eine Relativdrehung von Innenschaft (38) und Außenschaft (39) in und außer Eingriff mit den Nockenbahnen (52) der Zungen (47) bringbar sind;

i) im Verbindungszustand liegen die Nocken (41) des Innenschaftes (38) an den zugehörigen Nockenbahnen (52) des Außenschaftes (39) an, wobei die Ringflächensegmente (51) der federnden Zungen (47) die entgegengerichtete Ringfläche (23) in der Befestigungsbohrung (19) der Speichenscheibe (11) hakenartig übergreifen und Bereiche der Zungen an Bereichen der Befestigungsbohrung mit Reibschluß angepreßt sind.

2. Kraftfahrzeugrad nach Anspruch 1, dadurch gekennzeichnet, daß die Ringfläche (23) der Befestigungsbohrung (19) als Kegelmantelfläche ausgebildet ist und die Ringflächensegmente (51) der federnden Zungen (47) als komplementäre Kegelmantelflächensegmente ausgebildet sind, wobei diese Kegelmantelflächensegmente (51) im Verbindungszustand mit Reibschluß an der Kegelmantefläche (23) anpreßbar sind.

3. Kraftfahrzeugrad nach Anspruch 1 oder 2, dadurch gekennzeichnet, daß die Ringfläche (23) durch die Seitenwand einer in die Befestigungsbohrung (19) eingeformten Ringnut (22) gebildet wird.

4. Kraftfahrzeugrad nach Anspruch 3, dadurch gekennzeichnet, daß die Ringflächensegmente (51) durch die Seitenflanken von an den Außenseiten der federnden Zungen (47) radial abstehend angeformten Wülsten (49) gebildet sind.

5. Kraftfahrzeugrad nach Anspruch 1, dadurch gekennzeichnet, daß die Nockenbahnen (52) an den federnden Zungen (47) bezüglich des Bewegungskreises der Nocken (41) aufeinanderfolgend jeweils in eine Einlaufschräge (53), eine Rastmulde (54) und einen das weitere Verdrehen hindernden Drehanschlag (56) gegliedert sind.

6. Kraftfahrzeugrad nach Anspruch 5, dadurch gekennzeichnet, daß die Nocken (41) im Verbindungszustand in den Rastmulden (54) eingerastet sind und dabei unter elastischer Deformation des rohrförmigen Endbereiches des Innenschaftes (38) radial einwärts gedrückt sind.

7. Kraftfahrzeugrad nach Anspruch 1, dadurch gekennzeichnet, daß am Innenschaft (38) zumindest drei am Umfang verteilte, radial abstehende Rippensegmente (42) angeformt sind, die bajonettartig an korrespondierende Riegelflächensegmente (43) des Außenschaftes (39) anlegbar sind.

8. Kraftfahrzeugrad nach Anspruch 5 und 7, dadurch gekennzeichnet, daß die Längen der Rippensegmente (42) und Riegelflächensegmente (43) so aufeinander abgestimmt sind, um in den beiden Drehanschlagpositionen von Innenschaft (38) zu Außenschaft (39) in Eingriff zu stehen, sowie auch während etwa dem halben Gesamtdrehweg, ausgehend von der dem Verbindungszustand entsprechenden Drehanschlagposition.

9. Kraftfahrzeugrad nach Anspruch 1, dadurch gekennzeichnet, daß der Außenschaft (39) gegenüber der Deckscheibe (27) unverdrehbar fixiert ist.

10. Kraftfahrzeugrad nach einem oder mehreren der vorstehenden Ansprüche, dadurch gekennzeichnet, daß der Außenschaft (39) mit einem äußeren Umfangsbereich (44) dichtend an einer zur Außenseite (17) der Speichenscheibe (11) gerichteten ringförmigen Begrenzungsfläche (21) der Befestigungsbohrung (19) anlegbar ist, daß die Deckscheibe (27) mit einer zentralen innenseitigen Ringfläche (32) am Außenschaft (39) dichtend anlegbar ist und daß schließlich der am Innenschaft (38) angeformte Kopf (34) mit seiner ringformigen Flanschfläche (36) dichtend an die Außenseite der Deckscheibe (27) anlegbar ist.

**Claims**

1. Motor vehicle wheel having a spoke disc and a wheel cap with the following known features :

a) the spoke disc has a somewhat dish-shaped configuration and is produced from light metal, in its centre a central bore is opened which is oriented coaxially with an axis of rotation, several through-passing bores for the passage of threaded bolts for the securing of the spoke disc to a motor vehicle axle are provided on a circle of holes which is coaxial with the axis of rotation, with the inner side of the spoke disc facing the vehicle axle in the assembled condition, in the spoke disc a securing bore is arranged coaxially with the axis of rotation and accessibly from the exterior, the diameter of which bore is greater than 5 cm. And in the inner wall of which bore retaining flanks are formed which are oriented at a wedge angle in relation to the axis of rotation;

b) a wheel cap which covers at least the central zone with the throuch-passing bores is fittable on the outside of the spoke disc;

c) the wheel cap consists of a cover disc with a central bore and a securing part passing through this bore;

d) the securing part is fixable with its shank in the securing bore of the spoke disc and applicable with its head externally against the cover disc in order to hold the latter fast on the spoke disc;

e) the securing bore (19) has a coaxial annular face (23) which extends somewhat radially and points towards the inner side of the spoke disc (11);

f) the securing part (28) consists of an inner shank (38) connected fast in rotation with the head (34) and penetrating the central bore (33) of the cover disc (27) and an outer shank (39) mounted limitedly rotatably and axially arrestably thereon, which outer shank is internally applicable to the cover disc (27) with the end zone (46) facing the head (34);

g) the end region of the outer shank (39), which is insertable into the securing bore (39), has at least three radially resilient tongues (47) distributed on the circumference, in the exterior of which there are formed coaxial annular surface segments (51) corresponding to the annular surface (23) in the securing bore, having a radially protruding course and pointing towards the cover disc (27), while radially inwardly directed cam tracks (52) are formed on the inside of the tongues (47);

h) the inner shank (38) has in the end region a number, corresponding to the number of the resilient tongues (47), of radially outwardly protruding cams (41) which are bringable into and out of engagement with the cam trachs (52) of the tongues (47) in a relative rotation of inner shank (38) and outer shank (39);

i) in the connected condition the cams (41) of the inner shank (38) lie against the pertinent cam tracks (52) of the outer shank (39), while annular surface segments (51) of the resilient tongues (47) grasp in hook manner over the oppositely directed annular surface (23) in the securing bore (19) of the spoke disc (11) and regions of the tongues are pressed with frictional engagement on regions of the securing bore.

2. Motor vehicle wheel according to Claim 1 or 2, characterised in that the annular surface (23) of the securing bore (19) is made as cone circumferential surface and the annular surface segments (51) of the resilient tongues (47) are formed an matching cone circumferential surface segments, these cone circumferential surface segments (51) being pressable with frictional engagement on the cone circumferential surface (23) in the connected condition.

3. Motor vehicle wheel according to Claim 1 or 2, characterised in that the annular surface (23) is formed by the side wall of an annular groove (22) shaped into the securing bore (19).

4. Motor vehicle wheel according to Claim 3, characterised in that the annular surface segments (51) are formed by the side flanks of beads (49) formed protruding radially on the outsides of the resilient tongues (47).

5. Motor vehicle wheel according to Claim 1, characterised in that the cam tracks (52) on the resilient tongues (47) are divided, in succession in relation to the circle of movement of the cams (41), esch into an entry slope (53), a detent trouch (54) end a rotation stop (56) preventing further rotation.

6. Motor vehicle wheel according to Claim 5, characterised in that the cams (41) in the connected state are snapped into the detent troughs (54) and in this action are pressed radially inwards with elastic deformation of the tubular end region of the inner shank (58).

7. Motor vehicle wheel according to Claim 5, characterised in that on the inner shank (38) there are formed at least three circumferentially distributed, radially protruding rib segments (42) which are applicable in bayonet manner to corresponding locking face segments (43) of the outer shank (39).

8. Motor vehicle wheel according to Claims 5 and 7, characterized in that the lengths of the rib segments (42) and locking face segments (43) are adapted to one another in order to be in engagement in the two rotational stop positions of inner shank (38) in relation to outer shank (39), and also during about half the total rotation path, starting from the rotational stop position corresponding to the connected condition.

9. Motor vehicle wheel according to Claim 1, characterised in that the outer shank (39) is fixed non-rotatably in rolation to the cover disc (27).

10. Motor vehicle wheel according to one or more of the preceding Claims, characterised in that the outer shank (39) is applicable with en outer circumferential zone (44) is sealing manner on an annular defining surface (21), directed to the outside (17) of the spoke disc (11), of the securing bore (19), in that the cover disc (27) is applicable in senling manner with a central internal annular face (32) to the outer shank (39) and finally in that the head (34) formed on the inner shank (38) is applicable with its annular flange face (36) in sealing manner to the outside of the cover disc (27).

## Revendications

1. Roue de véhicule automobile avec un disque à rayons et un enjoliveur, présentant les caractéristiques suivantes:

a) le disque à rayons a une forme ressemblant à une assiette et est fabriqué en métal léger; en son centre est ménagé un orifice central, qui est monté coaxialement à un axe de rotation; sur un cercle de tous coaxial à l'axe de rotation sont prévus plusieurs orifices pour la traversée de boulons filetés pour la fixation du disque à rayons à un axe du véhicule, le côté intérieur du disque à rayons étant, à l'état monté, tourné vers l'axe du véhicule dans le disque à rayons est disposé coaxialement à l'axe de rotation un orifice de fixation accessible par le côté extérieur, orifice dont le diamètre est supérieur à cinq centimètres et dans la paroi duquel sont ménagés des flancs d'arrêt, qui font un angle conique par rapport à l'axe de rotation;

b) sur le côté extérieur du disque à rayons, on peut adapter un enjoliveur, qui recouvre au moins la zone centrale avec les orifices de traversée;

c) l'enjoliveur se compose d'un disque de couverture avec un orifice central et une partie de fixation traversant cet orifice;

d) la partie de fixation peut être fixée avec son axe dans l'orifice de fixation du disque à rayons a être posée avec sa tête du côté extérieur au disque de couverture, pour maintenir celui-ci sur le disque à rayons,

caractérisée en ce que:

e) l'orifice de fixation (19) a une surface annulaire (23) à peu près radiale et coaxiale au côté intérieur du disque à rayons (11);

f) la partie de fixation (26) se compose d'un arbre intérieur (38) relié de manière solidaire avec la tête (34) et traversant l'orifice central (33) du disque de couverture (27) et d'un arbre extérieur (39) rotatif de manière limitée et posé axialement de manière à pouvoir être arrêté, arbre qui peut être disposé par le côté interne sur le disque de couverture (27) avec la zone frontale (45) tournée vers la tête (34);

g) la zone terminale de l'arbre extérieur (39) insérable dans l'orifice de fixation (19) a au fins trois languettes (47), réparties à la périphérie, radialement élastiques, dans le côté extérieur desquelles sont montés des segments de surface annulaire (51) correspondant aux surfaces annulaires (23) dans l'orifice de fixation, distants radialement et tournés vers le disque de couverture (27), et dans laquelle sont adaptées des courses d'ergots (52) tournées radialement vers l'intérieur sur le côté intérieur des languettes (47);

h) l'arbre intérieur (38) a dans la zone terminale un nombre, correspondant au nombre des languettes élastiques (47), d'ergots (41) radialement écartés vers l'extérieur, que l'en peut amener par une rotation relative de l'arbre intérieur (38) et de l'arbre extérieur (39), hors de prise avec les courses (52) peur ergots des languettes (47);

i) en prise, les ergots (41) de l'arbre intérieur (38) se trouvent sur les courses correspondantes (52) de l'arbre extérieur (39), les segments de surface annulaire (51) des languettes élastiques (47) empiètent comme des crochets sur les surfaces annulaires (23) opposées dans l'orifice de fixation (19) du disque à rayons (11) et des zones des languettes sont pressées jusqu'à la fermeture sur des zones de l'orifice de fixation.

2. Roue de véhicule automobile selon la revendication 1, caractérisée en ce que les surfaces annulaires (23) de l'orifice de fixation (13) ont la forme d'une enveloppe conique et que les segments de surface annulaire (51) des languettes élastiques (47) ont la forme de segments d'enveloppe conique complémentaire, qu'on peut fixer par pression jusqu'à fermeture sur l'enveloppe conique (23).

3. Roue de véhicule automobile selon l'une des revendications 1 ou 2, caractérisée en ce que la surface annulaire (23) est formée par la paroi latérale d'une rainure annulaire (22), insérée dans l'orifice de fixation (19).

4. Roue de véhicule automobile selon la revendication 3, caractérisée en ce que les segments de surface annulaire (51) sont formés par les flancs de bourrelets (49) radialement distants, forcés sur les côtés extérieurs des languettes élastiques (47).

5. Roue de véhicule automobile selon la revendication 1, caractérisée en ce que les courses des ergots (52) sont reliées aux languettes élastiques (47) par rapport au mouvement circulaire des ergots (41), successivement chacun dans un chanfrein d'introduction (53), dans une cuvette d'arrêt (54) et une butée de rotation (56) empêchant la poursuite de la rotation.

6. Roue de véhicule automobile selon la revendication 5, caractérisée en ce que les ergots (41) sont, lorsqu'ils sont reliés, enclenchés dans les cuvettes d'arrêt (54) et ainsi pressés radialement vers l'intérieur par déformation élastique de la zone terminale tubulaire de l'arbre intérieur (38).

7. Roue de véhicule automobile selon la revendication 1, caractérisée en ce que sur l'arbre antérieur (38) sont adaptés au moins trois segments de nervure (42), distants radialement, répartis sur la périphérie, que l'on peu fixer, avec un système à baïonnette, sur les segments de surface correspondante de verrouillage (43) de l'arbre extérieur (39).

8. Roue de véhicule automobile selon les revendications 5 et 7, caractérisée en ce que les longueurs des segments de nervures (42) et des segments de surface de verrouillage (43) sont adaptées les unes aux autres, pour être en prise dans les deux positions de butée en rotation de l'arbre intérieur (38) par rapport à l'arbre extérieur (39), ainsi que aussi, pendant environ la moitié de la trajectoire totale en rotation, en partant de la position de butée en rotation correspondant à l'état de fixation.

9. Roue de véhicule automobile selon la revendication 1, caractérisée en ce que l'arbre extérieur (39) est fixé sans possibilité de rotation par rapport au disque de couverture (27).

10. Roue de véhicule automobile selon une ou plusieurs des revendications précédentes, caractérisée en ce que l'arbre extérieur (39) peut être mis en contact hermétique par une zone periphérique extérieure (44) sur une surface périphérique (21) annulaire tournée vers le côté extérieur (17) du disque à rayons (11), de l'orifice de fixation (19), que le disque de couverture (27) peut être mis en contact hermétique sur l'arbre extérieur (39) par une surface annulaire centrale (32) tournée vers l'intérieur et que, enfin, la tête (34) adaptée à l'arbre intérieur (38) peut être mise en contact hermétique sur le côté extérieur du disque de couverture (27), par sa surface latérale annulaire (36).

FIG.1

1

FIG.2

FIG.3

FIG.4

FIG.5